Europäisches Patentamt

European Patent Office

Office européen des brevets

(11) Veröffentlichungsnummer: **0 486 975 A1**

## EUROPÄISCHE PATENTANMELDUNG

(21) Anmeldenummer: **91119569.1**

(22) Anmeldetag: **15.11.91**

(51) Int. Cl.5: **F16J 15/12**

(30) Priorität: **19.11.90 DE 4036871**

(43) Veröffentlichungstag der Anmeldung:
**27.05.92 Patentblatt 92/22**

(84) Benannte Vertragsstaaten:
**AT BE CH DE DK ES FR GB GR IT LI LU NL SE**

(71) Anmelder: **REINZ-DICHTUNGS-GMBH**
**Reinzstrasse 3-7**
**W-7910 Neu-Ulm(DE)**

(72) Erfinder: **Ludwig, Josef**
**Abtstrasse 33**
**W-7908 Niederstotzingen(DE)**

(74) Vertreter: **Weber, Otto Ernst, Dipl.-Phys. et al**
**Hofbrunnstrasse 36**
**W-8000 München 71(DE)**

(54) **Zylinderkopfdichtung mit beschichteter Metalleinfassung des Brennraumdurchbruchs.**

(57) In einer Zylinderkopfdichtung, deren flacher Grundkörper aus Weichstoffmaterial (1) im Bereich der Brennraumdurchbrüche (5) mit einem U-förmigen Metallbördel eingefaßt ist, umschließen dessen beide umlaufenden Einfassungsschenkel (2) das Weichstoffmaterial (1). Um Spannungen zwischen dem Weichstoffmaterial (1) und dem Metallbördel zu verhindern oder zumindest drastisch herabzusetzen, ist zwischen diesen Materialien eine Gleitschicht (3) vorgesehen, vorzugsweise in Gestalt einer Gleitbeschichtung (3) der Innenseite zumindest eines der beiden Einfassungsschenkel (2) des U-förmigen Metallbördels.

Die Erfindung betrifft eine Zylinderkopfdichtung der im Anspruch 1 angegebenen Art.

Bei derartigen Zylinderkopfdichtungen dient der Metallbördel im Bereich des Brennraumdurchbruchs dem Schutz des Weichstoffes des flachen Dichtungsgrundkörpers vor den dort auftretenden hohen Temperaturen sowie den dort strömenden Verbrennungsgasen. Außerdem lassen sich aufgrund dieser metallischen Schutzeinfassung des Weichstoffmaterials örtlich hohe Flächenpressungen auf die Dichtung erzielen. In bestimmten Einsatzfälle kommt es jedoch im Motorbetrieb schon nach relativ kurzen Laufzeiten zu Beschädigungen der in Rede stehenden Zylinderkopfdichtung, und zwar zu Beschädigungen in Gestalt von Brüchen des Metallbördels oder zu Beschädigungen in Gestalt eines Zerreißens des Weichstoffmaterials des flachen Dichtungsgrundkörpers.

Für Beschädigungen oder Zerstörungen dieses Typs von Zylinderkopfdichtungen sind eine Reihe unterschiedlicher Ursachen verantwortlich, auf die nachfolgend näher eingegangen werden soll.

Bei Verbrennungsmotoren werden unterschiedliche Werkstoffe zur Herstellung der Motorenbauteile verwendet. Häufig kommen Bimetallkonstruktionen zum Einsatz, bei denen der Motorblock aus Grauguß und der Zylinderkopf aus einer Aluminiumlegierung oder umgekehrt gefertigt sind. Solche Bimetallkonstruktionen erweisen sich für die zwischen Motorblock und Zylinderkopf angeordnete Zylinderkopfdichtung der in Rede stehenden Art deshalb als nachteilig, weil im Bereich der Zylinderkopfdichtung durch die Materialpaarung unterschiedliche Materialeigenschaften aufeinandertreffen.

Von Bedeutung sind dabei beispielsweise die unterschiedliche Festigkeit, der unterschiedliche Elastizitätsmodul und der unterschiedliche Längenausdehnungskoeffizient, der bei Bimetallkonstruktionen verwendeten Materialen. So beträgt beispielsweise der Längenausdehnungskoeffizient von Aluminium 0,000024 und derjenige von Grauguß 0,0000131. Bei einer Motorbetriebstemperatur von 100° C ergeben sich bei einer Bimetallkonstruktion aus Aluminium und Grauguß je nach Bauweise Längendifferenzen zwischen den Bauteilen von bis zu 0,5 mm, wobei die zwischen den Bauteilen unterschiedlichen Materials angeordnete Zylinderkopfdichtung solche Längendifferenzen zulassen muß, ohne daß die Dichtung beschädigt oder zerstört und damit undicht wird.

Es ist bekannt, die Oberflächen von Zylinderkopfdichtungen zu beschichten, um eine Gleitbewegung der Motorenbauteile an den Dichtungsoberflächen zuzulassen. Im Falle einer Zylinderkopfdichtung mit metallumbördeltem Brennraumdurchlaß hat sich diese Schutzmaßnahme, nämlich die Oberflächenbeschichtung der Dichtung nicht unter allen Umständen als hinreichend erwiesen. Vielmehr hat es sich herausgestellt, daß durch die Relativbewegung der Motorbauteile Spannungen auf die metallische Bördeleinfassung übertragen werden, die entweder dazu führen, daß der Metallbördel bricht oder daß das Weichstoffmaterial des Dichtungsgrundkörpers zerreißt.

Beim Herstellen der in Rede stehenden Zylinderkopfdichtung treten durch das Umbördeln des Brennraumdurchbruchs, mit dem ein Einpressen des Weichstoffmaterials zwischen den Einfassungsschenkeln des Metallbördels verbunden ist, zwischen dem Metallbördel und dem Weichstoffmaterial Spannungen auf. Diese Spannungen werden durch die Montage im Motor teilweise kompensiert, andererseits jedoch aufgrund von Verzügen der Motorbauteile und weiterer Verformung des Dichtungsmaterials sowie durch thermisch bedingtes Setzverhalten der Dichtung vergrößert. Auch dies kann zum Zerreißen der Dichtung sowie zum Zerbrechen der metallischen Bördeleinfassung führen.

Der Erfindung liegt die Aufgabe zugrunde, eine Zylinderkopfdichtung der eingangs genannten Art zu schaffen, die Belastungen bei der Herstellung und beim bestimmungsgemäßen Einsatz in Motoren zugunsten längerer Standzeiten besser zu widerstehen vermag.

Gelöst wird diese Aufgabe durch die kennzeichnenden Merkmale des Anspruchs 1. Vorteilhafte Weiterbildungen der Erfindung sind in den Unteransprüchen angegeben.

Demnach besteht die Erfindung in einer gleitfähigen Verbindung des Metallbördel mit dem Weichstoffmaterial des flachen Dichtungsgrundkörpers. Erreicht wird diese gleitfähige Verbindung dadurch, daß die Kontaktfläche zumindest eines der beiden Einfassungsschenkel mit dem Weichstoffmaterial gleitbeschichtet ist.

Aufgrund der erfindungsgemäß vorgesehenen Gleitverbindung des Metallbördels mit dem eingefaßten Weichstoffmaterial werden Relativbewegungen zwischen dem Weichstoffmaterial und dem Metallbördel ermöglicht, durch welche Spannungen zwischen diesen Materialien soweit abgebaut werden, daß diese nicht zu einem Zerreißen des Weichstoffmaterials bzw. zu Brüchen des Metallbördels führen können.

Vorteilhafterweise ist die Gleitbeschichtung an beiden Einfassungsschenkeln des U-förmigen Metallbördels vorgesehen.

Da die Beschichtung der Einfassungschenkel zur Verringerung der Reibkräfte zwischen diesen und dem umschlossenen Weichstoffmaterial dient, ist grundsätzlich eine Beschichtung nur im Kontaktbereich zwischen Einfassungsschenkeln und Weichstoffmaterial erforderlich. Aus fertigungstechnischen Gründen wird jedoch vorzugsweise eine ganzflächige Beschichtung der einen Seite des Blechstreifens vorgenommen, der für die Umbördelung des Brennraumdurchbruchs vorgesehen ist.

Für die Herstellung der in Rede stehenden Zylinderkopfdichtung werden je nach Anwendungsfall verschiedene Weichstoffmaterialien bzw. verschiedene Materialien für den Metallbördel verwendet. Diese unterschiedlichen Materialien erfordern zugunsten einer ausreichenden Gleitverschieblichkeit der miteinander verbundenen Teile jeweils ein Werkstoffmaterial für die Gleitbeschichtung. Insbesondere sind dabei die Struktur und die Schichtdicke der Gleitbeschichtung an die Oberflächenbeschaffenheit des Grundkörpers anzupassen. Unterschiedliche Weichstoffmaterialien erfordern je nach Oberflächenbeschaffenheit, d.h. je nach freiem Porenvolumen und Porenquerschnitt einen geeigneten Beschichtungswerkstoff, nämlich einen solchen Werkstoff, der bezüglich seiner Partikelgröße und Schichtdicke an die jeweilige Oberflächenbeschaffenheit angepaßt ist. So benötigt beispielsweise ein saugfähiges Weichstoffmaterial eine Beschichtung, die aus größeren Feststoffpartikeln besteht als eine Beschichtung für ein weniger saugfähiges Weichstoffmaterial. Andererseits ist die Schichtdicke der Gleitbeschichtung an die Oberflächenrauhigkeit des Weichstoffmaterials anzupassen. D.h., daß bei einer großen Oberflächenrauhigkeit des Weichstoffmaterials die Schichtdicke der Gleitbeschichtung entsprechend groß ausgelegt werden muß.

Vorteilhafterweise wird unterschiedlichen Weichstoffmaterialien und unterschiedlichen Materialien des Metallbördels Rechnung getragen durch eine Kombination unterschiedlicher Beschichtungswerkstoffe. Als vorteilhafte Beschichtungswerkstoffe kommen in Frage MoS$_2$, Graphit oder PTFE. Soweit diese Materialien in Pulverform vorliegen, bedürfen sie der Beimischung eines hochtemperaturfesten Bindemittels, um die erforderliche Haftung der Gleitbeschichtung an den Einfassungsschenkeln des Metallbördels zu gewährleisten. Als Bindemittel besonders geeignet sind aushärtende duroplastische Harze.

Wie vorstehend ausgeführt, kann die Kombination unterschiedlicher Werkstoffe für die Gleitbeschichtung von Vorteil sein. So ergibt sich beispielsweise bei der gleichzeitigen Verwendung von MoS$_2$ und PTFE ein vorteilhafter synergistischer Effekt deshalb, weil MoS$_2$ gut auf der Oberfläche des Metallbördels gleitet, während das weichere PTFE die rauhe Weichstoffoberfläche besser auszufüllen vermag.

Zur Aufbringung der Gleitbeschichtung eignen sich je nach Art der Gleitbeschichtung und nach Dicke dieser Beschichtung unterschiedliche Verfahren. So können beispielsweise dünne Schichtdicken der Gleitbeschichtung erzielt werden durch Walzen, Gießen oder Drucken, insbesondere Siebdrucken. Größere Schichtdicken können beispielsweise durch mehrfaches Aufspritzen realisiert werden.

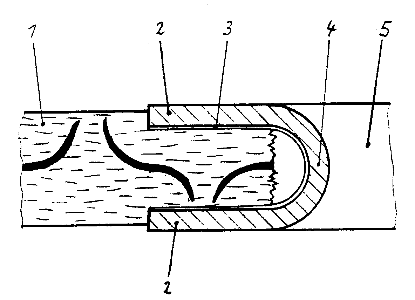

Nachfolgend soll die Erfindung anhand der Zeichnung näher erläutert werden. Die einzige Figur der Zeichnung zeigt eine Schnittansicht der erfindungsgemäßen Zylinderkopfdichtung im Bereich eines Brennraumdurchbruchs dieser Dichtung.

Die dargestellte Zylinderkopfdichtung besteht aus einem flachen Grundkörper 1 aus Weichstoffmaterial, in welches im Querschnitt **gezackte** Verstärkungseinlagen eingebracht sind. Der Brennraumdurchbruch 5 der dargestellten Zylinderkopfdichtung ist randseitig mit einem U-förmigen Metallbördel eingefaßt. Das Weichstoffmaterial des Grundkörpers 1 wird also im Bereich des Brennraumdurchbruchs von den beiden Einfassungsschenkeln 2 des U-förmigen Metallbördels umschlossen, die über eine Bördelnase 4 miteinander in Verbindung stehen, welche dem Krümmungsbereich des U-förmigen Metallbördels entspricht.

Innenseitig ist der umlaufende U-förmige Metallbördel mit einer Gleitbeschichtung 3 versehen. Aufgrund der Gleitbeschichtung 3 steht das Weichstoffmaterial des Grundkörpers 1 nicht in direktem Kontakt mit dem Material des U-förmigen Metallbördels. Dieser Kontakt erfolgt vielmehr unter Zwischenschaltung der Gleitbeschichtung 3, die Gleiteigenschaften aufweist bezüglich des Weichstoffmaterials. Die Dicke der Gleitbeschichtung 3 ist dabei so gewählt, daß die rauhe Oberfläche des Weichstoffmaterials im Bereich der Einfassungsschenkel 2 zugunsten einer guten Gleitfähigkeit vollständig ausgefüllt ist.

Als Material für die Gleitbeschichtung 3 kommt beispielsweise MoS$_2$, Graphit oder PTFE in Frage. Die Auswahl der Materialien für die Gleitbeschichtung 3 erfolgt aufgrund der jeweiligen Erfordernisse, also unter Beachtung der zu erwartenden Pressdrucke und der hohen Temperaturen beim bestimmungsgemäßen Einsatz der Zylinderkopfdichtung. So ist beispielsweise bei extrem großen Pressdrucken PTFE aufgrund seiner schwächeren Strukturfestigkeit für die Gleitbeschichtung 3 weniger geeignet. Für diesen Fall ist beispielsweise MoS$_2$ oder Graphit besser geeignet. Auch Kombinationen unterschiedlicher Gleitbeschichtungswerkstoffe können nicht nur aus Kostengründen vorteilhafterweise verwendet werden, sondern auch deshalb, weil durch solche Kombinationen synergistische Effekte ausgenützt werden können.

Der Vorteil der Gleitbeschichtung 3 besteht darin, daß Spannungen zwischen dem Weichstoffmaterial und dem Metallbördel durch eine Relativverschiebung dieser beiden Materialen zueinander ausgeglichen werden können, wodurch im Vergleich zu herkömmlichen Zylinderkopfdichtungen ohne eine derartige Gleitbeschichtung zwischen dem Weichstoffmaterial und dem Metallbördel eine erhöhte Standfestigkeit der Zylinderkopfdichtung erreicht wird, weil die Gefahr des Zerreißens des Weichstoffmaterials und die Gefahr, daß der Metallbördel bricht, entscheidend herabgesetzt ist.

Grundsätzlich gleichwirkend kann auch das Weichstoffmaterial des flachen Grundkörpers 1 grundsätzlich mit der Gleitbeschichtung 3 versehen sein. Entscheidend ist lediglich, daß zwischen dem Weichstoffmaterial und dem Metallbördel überhaupt eine geeignete Gleitschicht vorhanden ist.

**Patentansprüche**

1. Zylinderkopfdichtung mit einem flachen Grundkörper aus Weichstoffmaterial, in dem wenigstens ein Brennraumdurchgang ausgebildet ist, dessen Rand von einem im Querschnitt U-förmigen umlaufenden Metallbördel eingefaßt ist, der mit seinen beiden Einfassungsschenkeln das Weichstoffmaterial umschließt, **dadurch gekennzeichnet,** daß zumindest zwischen einem der beiden Einfassungsschenkel und dem Weichstoffmaterial des Grundkörpers (1) eine Gleitbeschichtung (3) angeordnet ist.

2. Zylinderkopfdichtung nach Anspruch 1, **dadurch gekennzeichnet,** daß beide Einfassungsschenkel (2) innenseitig mit der Gleitbeschichtung (3) versehen sind.

3. Zylinderkopfdichtung nach Anspruch 1 oder 2, **dadurch gekennzeichnet,** daß die Gleitbeschichtung (3) aus einem Werkstoff besteht, dessen Reibungskoeffizient auch bei hohen Temperaturen und hohen Pressdrucken beim bestimmungsgemäßen Einsatz in Verbrennungsmotoren im wesentlichen konstant ist.

4. Zylinderkopfdichtung nach Anspruch 1, 2 oder 3, **dadurch gekennzeichnet,** daß der Werkstoff der Gleitbeschichtung (3) bezüglich seiner Struktur und Schichtdicke an die Oberflächenbeschaffenheit des Grundkörperweichstoffs angepaßt ist.

5. Zylinderkopfdichtung nach Anspruch 4, **dadurch gekennzeichnet,** daß die Schichtdicke der Gleitbeschichtung (3) etwa 5 bis 50 $\mu$, vor allem 5 bis 25 $\mu$ beträgt.

6. Zylinderkopfdichtung nach einem der Ansprüche 1 bis 5, **dadurch gekennzeichnet,** daß die Gleitbeschichtung (3) aus einem einzigen gleitfähigen Werkstoff besteht.

7. Zylinderkopfdichtung nach einem der Ansprüche 1 bis 5, **dadurch gekennzeichnet,** daß die Gleitbeschichtung (3) mehrere Schichten aus unterschiedlichen gleitfähigen Werkstoffen umfaßt.

8. Zylinderkopfdichtung nach Anspruch 6 oder 7, **dadurch gekennzeichnet,** daß der gleitfähige Werkstoff $MoS_2$ ist.

9. Zylinderkopfdichtung nach Anspruch 6 oder 7, **dadurch gekennzeichnet,** daß der gleitfähige Werkstoff Graphit ist.

10. Zylinderkopfdichtung nach einem der Anspruch 6 oder 7, **dadurch gekennzeichnet,** daß der gleitfähige Werkstoff PTFE ist.

11. Zylinderkopfdichtung nach einem der Ansprüche 6 bis 10, **dadurch gekennzeichnet,** daß dem gleitfähigen Werkstoff ein hochtemperaturfestes Bindemittel beigemischt ist.

12. Zylinderkopfdichtung nach Anspruch 10, **dadurch gekennzeichnet,** daß das hochtemperaturfeste Bindemittel ein duroplastisches Harz ist.

EP 0 486 975 A1

Europäisches
Patentamt

**EUROPÄISCHER RECHERCHENBERICHT**

Nummer der Anmeldung

EP 91 11 9569

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 019 477 (REINZ)<br>* Ganzes Dokument *<br>--- | 1,2,6,7 | F 16 J 15/12 |
| X | EP-A-0 214 377 (GOETZE)<br>* Seite 6, Zeilen 7-8; Figur 12 *<br>--- | 1-3,6,9 | |
| A | GB-A-2 091 824 (GOETZE)<br>* Ganzes Dokument *<br>--- | 1,5,6-12 | |
| A | DE-A-3 905 922 (GOETZE)<br>* Ganzes Dokument *<br>----- | 1,3,5,6-12 | |
| | | | **RECHERCHIERTE SACHGEBIETE (Int. Cl.5)**<br><br>F 16 J |

Der vorliegende Recherchenbericht wurde für alle Patentansprüche erstellt

| Recherchenort | Abschlußdatum der Recherche | Prüfer |
|---|---|---|
| DEN HAAG | 13-02-1992 | LEGER M.G.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................................................
& : Mitglied der gleichen Patentfamilie, übereinstimmendes
    Dokument